# EUROPEAN PATENT SPECIFICATION

(11) **EP 0 226 661 B1**
(45) Date of publication and mention of the grant of the patent: **22.02.1995**
(21) Application number: 85116545.6
(22) Date of filing: 24.12.1985
(51) Int. Cl.: G01N 23/05, H04N 5/32

(54) **Radiographic inspection means and method**
Verfahren und Mittel zur Durchstrahlungsprüfung
Procédé et moyen de contrôle radiographique

(43) Date of publication of application: 01.07.1987
(60) Divisional application: 89123622.6
(73) Proprietor: Loral Vought Systems Corporation, Grand Prairie, Texas 75051 (US)
(72) Inventor: Dance, William E., Dr., Dallas Texas 75229 (US); Carollo, Sammy F., Irving Texas 75062 (US)
(74) Representative: KUHNEN, WACKER & PARTNER

(56) References cited:
- DE-A- 2 301 968
- GB-A- 2 068 629
- US-A- 2 297 478
- US-A- 3 891 852
- US-A- 4 300 054
- ISOTOPENPRAXIS, vol. 12, no. 12, 1976, pages 449-457; E. BECKER "Neutronen-Radiographie zur Grobstruktur-Untersuchung"
- IEEE TRANSACTIONS ON NUCLEAR SCIENCE, vol. 28, no. 1, February 1981, pages 852-856, New York, US; K. KALATA "A computer controlled television detector for light, X-Rays and particles"
- NUCLEAR INSTRUMENTS & METHODS IN PHYSICS RESEARCH, vol. 208, no. 1/3, April 1983, pages 435-438, Amsterdam, NL; W. PRIESKE et al.: "A vidicon camera for real time X-Ray diffraction studies on polymers using synchrotron radiation"
- Non-destructive Testing Handbook, 2nd Edition, Volume 3, American Society for Nondestructive Testing, 1985, Section 12, "Neutron Radiation", particularly pages 534, 535, 546, 548 and 549.
- Nondestructive Testing Handbook, Volume 3, American Society for Nondestructive Testing, 1985, pages 534-549.

## Description

The present invention relates to radiographic imaging systems and, more particularly, to radiographic apparatus having means for producing images derived from radiation shadowgraphs derived with the use of neutron sources.

The forming and processing of radiographically produced shadowgraphs or radiation transmission patterns to produce visual images of a specimen or workpiece is of interest in various applications, such as the radiographic inspection of various structural components. Previously, such inspection techniques entailed the forming of photoshadowgraphs. A photographic film plate was positioned adjacent to an object to be inspected by the neutron or X-ray source, the object being positioned between the film and the source of radiation. When neutron or X-radiation is transmitted through any hetrogeneous object, it is differently absorbed, depending upon the varying thickness, density, and chemical composition of the object. The image registered by the emergent rays on a film adjacent to the specimem under examination constitutes a shadowgraph, or radiograph, i.e. an intensity pattern of the rays transmitted, of the interior of the specimen.

X-radiation may be used in industrial applications wherein, for example, it is desired to evaluate a metal casting suspected of having internal cracks, separations, voids, or other defects; and it is, of course, employed widely in medical applications. X-rays are, in general, substantially more penetrating than neutron radiation with respect to "low-z" materials such as aluminums, plastic, boron, carbon, and the like. Radiographs produced from neutron radiation are employed, for example, when it is desired to form an image of hydrogenous, or organic materials which may be present within metallic structures. Neutrons penetrate low-thermal-cross-section materials such as lead, aluminum, steel, and titanium, but are absorbed by organic, hydrogenous materials. With respect to metallic structural members, an indication of such hydrogenous materials within the structure may reveal the presence of water, hydroxides, and other corrosion products. Such corrosion may be in the form of intergranular corrosion, with accompanying exfoliation, of materials such as aluminum, and certain other metals. Stresses in aluminum aircraft components, for example, produce internal, intergranular corrosion which is invisible and not accurately imaged by conventional, non-destructive inspection techniques; such corrosion may result in critical failure of major structural elements if it continues undetected. As in the design of load-bearing or structural members for various industrial applications, the conventional design philosophy for aerospace components entails a substantial degree of "over design" for ensuring structural integrity of the components. As will be understood by those in the art, such an excess of material results in correspondingly higher weight and cost, and in lower performance and fuel efficiency than would be obtained if compensation for potential, undetectable internal deterioration was not necessary. Similarly, the permissible useful life of such components is also based upon safety margins which can be substantially reduced if positive assurance were obtainable that internal, or hidden deterioration had not occurred to a significant degree.

Further difficulties with respect to non-destructive testing of aerospace components relate to the possibilities of surface corrosion on internal components hidden from visual inspection. Corrosion which may occur within honeycomb cell structures or panels may result in the separation of honeycomb cores from outer skin surfaces, and the like.

Isotopenpraxis, vol. 12, no. 12, 1976, pages 449-457 discloses a review over low level neutron spectroscopy techniques known in the prior art. According to said document, images produced by low level radiation are exposing photographic films for an appropriate period of time, the films being developed thereafter for inspection purposes.

Non destructive Testing Handbook, Volume 3, American Society for Nondestructive Testing, 1985, pages 534-549 discloses an apparatus and method as defined in the preamble of claim 1 and claim 13, respectively.

The use of photographic film provides the advantage that, through exposure over an extended period of time, very low levels of radiation may form a satisfactory photoradiograph. Exposure times, film speed, radiation levels and film types may be varied. It will be understood, however, that the delays entailed in setting up such film processing imparts limitations in inspection efficiency, particularly when it is desired to inspect, and reinspect, large components, or large numbers of components. For this reason, modern radiographic inspection systems have employed low-light-level television cameras for producing television images derived from the radiation of specimen, whereby a talevision display corresponding to a radiophotograph is formed. The television monitor may be located in a facility remote from the radiation source, which may afford advantages when hazardous radiation is present. Additionally, television monitoring permits continuous monitoring of a component as real, or "near real time examination". Such low-light-level television cameras may be of the image orthicon type or of other types, and often employ multiple stages of image intensification or amplification. Modern, low-light-level cameras include various refinements and intensification techniques, such as silicon intensified targets (SIT), secondary electron conduction (SEC), charge-storing, and amplifying.

In order to obtain integrated images K. Kalata (IEEE Transactions on Nuclear Science, vol. 28, no. 1, Feb. 1981, pages 852-856) and Prieske et al. (Nuclear Instruments and Methods in Physics Research, vol. 208, no. 1/3, April 1983, pages 435-438) are citing two different categories. In the first category, the images are integrated on a cooled target for a period of time ranging for a fraction of a second to several hours and are then readout by a single scan. The camera incorporates an S-T or SIT vidicon tube, a SEC vidicon tube or a CCD array, and appropriate slow scan camera electronics. In the second category an e. g. SIT vidicon is scanned at standard TV-frames and the image is thereafter integrated in a digital memory.

Two general approaches to the formation of television images of irradiated specimens are illustrated in U. S. patents Nos. 3,280,253 and 3,668,396, R. C. McMaster et al and J. A. Asars et al, respectively, both of which are hereby incorporated by reference. The system of the McMaster patent employs a single stage camera tube which is sensitive to X-radiation. In use, a radiation source is positioned to direct X-radiation directly toward the television camera tube after transmission through a workpiece to be inspected, and an image is formed on the camera tube target by electrons derived from the X-radiation directed toward the camera; the image is intensified by the use of periodic beam scanning, in which the radiation builds up an adequate image potential (an image pattern comprising a loss of positive charges at portions of a semiconductor target) between raster scanning cycles. A satisfactory TV image is produced by intermittent scanning of the target by the electron beam raster scanner. The McMaster camera includes no intermediate intensifying stages. Such single stage camera tubes provide relatively moderate gain in comparison with highly sensitive tubes such as that disclosed in the recent Asars patent. The McMaster system may thus be considered to have a relatively high level of input radiation (radiation directly from the X-ray source, which in of generally higher intensity and penetrating potential than portable neutron sources) and a relatively low level of internal intensification or amplification in comparison with multi-stage cameras such as that disclosed in the Asar patent. Such systems are advantageous for certain applications, and such single stage television cameras are less expensive and complex than multi-stage, very low-light-level cameras.

The Asars system employs a phosphor screen to provide a large field of view of appropriate resolution and detail, the phosphor screen serving to generate scintillations of light as the screen receives gamma radiation derived from a neutron source. The light scintillations on the screen are detected and intensified through the sensitive, multi-stage SEC camera tube. To provide adequate light amplification, the camera tube employs several stages of image intensification, including an initial image intensifier tube section and an intermediate image intensifying section. As will be understood by those in the art, sophisticated low-light level cameras such as that employed in the Asars system are highly complex and expensive.

The present system is intended to provide a radiographic television display with a relatively lower cost and less complex camera system, while at the same time providing very high sensitivity to low radiation levels and facilitating adjustment of the TV camera. In particular, it is intended to provide a radiographic system sensitive to "soft" or thermal neutron radiation, i.e., radiation from which the higher energy neutron and gamma rays have been removed, as may be obtained from portable radiographic generator systems such as that disclosed in U. S. Patent No. 4,300,054, issued November 10, 1981, to W. E. Dance et al, which is incorporated by reference. The system of the 4,300,054 patent employs a modulator fluid and filter for attenuating the hard gamma radiation from energy produced by a radiation generator tube. There is a need, particularly in the inspection of aircraft and other components by low power, non-isotopic radiation sources, for an efficient television radiographic display means wherein a high resolution image is produced for convenient viewing. In such systems, radioactive isotopes as radiographic sources are not employed, eliminating the hazards and inconveniences entailed in the transportation and storage of such materials.

A problem entailed in prior radiographic systems has been the difficulty in producing a high resolution, finely detailed image in the presence of varying levels of radiation. High radiation peaks may tend to overload and blur the camera and may even damage the camera. Another problem has been that very low levels of radiation, such as those obtained from thermal neutron sources and from low level X-rays, have been difficult to record because of inherent system noise. The obtaining of detailed images required to show fissures and details of internal deterioration of metals with sufficient resolution to ensure that no critical faults exist in a piece under inspection is of importance in many applications. A further deficiency in prior inspection systems has been their limitation to undesirably narrow ranges of energy levels. That is, those instruments sensitive to high level radiation such as that produced by X-radiation have been insensitive and not usable with lower levels of radiation commonly received as neutron radiation. Prior systems were not usable with low-level neutron radiation.

Accordingly, it is the purpose of the present invention to provide a new and improved radiographic imaging system and a method for forming radiographic images which overcomes said afore mentioned deficiencies being incorporated in prior art arrangements.

This object is solved by an apparatus in accordance with claim 1 and a method in accordance with claim 13.

Another advantage of the present invention is that an imaging system sensitive to relatively low levels of radiation is provided, including thermal neutron radiation free of any substantial gamma radiation. A still further advantage is to provide such a system which is operable to produce images of high resolution derived from thermal neutron radiation of, for example at least about 100 neutrons per square cm per second.

Yet another advantage is to provide such an imaging system which is usable to provide high resolution television images, and which can provide such images derived from shadowgraphs produced by neutron radiation.

A further advantage is to provide such an imaging system in which highly complex, low-light-level television cameras with multiple stages of intensification are not required, yet which provides an overall radiographic sensitivity comparable to or greater than such prior systems.

Yet another advantage is to provide such a system in which the television image produced is free of any substantial noise and distortion, wherein highly detailed images may be displayed permitting accurate inspection of components for small cracks, voids, fissures, and other similar faults.

Yet another advantage is to provide such an imaging system which is of practicable, relatively straightforward and inexpensive construction, permitting convenient portability.

Other advantages will be apparent from the specification and claims and from the accompanying drawing illustrative of the invention.

In the drawing:
FIGURE 1 is a partially diagrammatic, sectional view of the radiographic imaging system;
FIGURE 2 is a diagrammatic representation of the video tube, in combination with the beam blanking, video processing, and video monitoring circuitry.

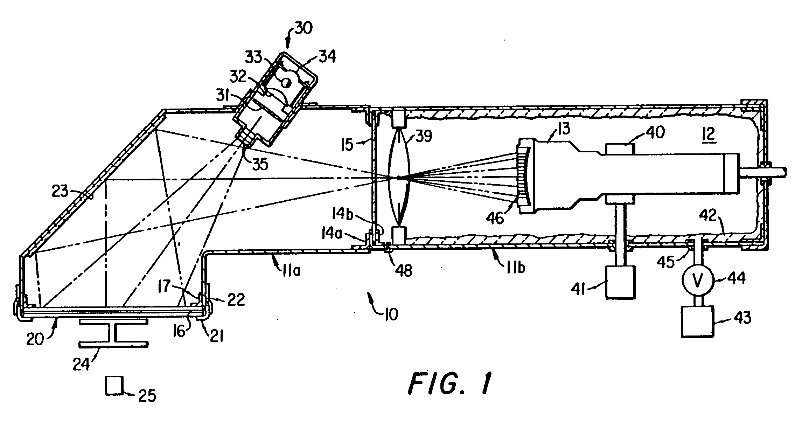

With initial reference to FIGURE 1, radiographic system 10 comprises a housing consisting of first and second segments 11A and 11B. As will be understood more fully from the discussion, the first housing 11A is closed to prevent the entry of light, and the second housing, in addition to being closed, defines a substantially gas impervious chamber 12. The second housing segment 11B is of elongated configuration, and is of a sufficiently large diameter to accommodate a low-light-sensitive television camera 13. Camera 13 is mounted (by internal spiders or other mounting means, not shown) coaxially within the housing segment 11B, and with its optical input 46 directioned toward the first housing segment 11A. The camera 13 is a beam scanning camera having a semi-conductor target screen, and is suitably of the silicon intensified camera type (SIT); alternatively, other electronic scanning cameras may be employed such as the secondary emission charged coupled device (CCD), or charge injected device (CID) types. An example of a commercially available silicon intensified camera is manufactured by Arvin Diamond Corporation company as Model No. 6073B.

The first and second housing segments 11A, 11B are connected by means such as flanges 14A, 14B affixed within abutting edge portions of the respective housings bolted or otherwise connected. A transparent, suitable glass plate 15 is sealingly mounted across an open end of the second housing segment 11B in front of the camera 13 permitting the passage of light to the camera input screen 46, as will be described in more detail hereinbelow. The first housing segment 11A is preferably generally L-shaped, having a perpendicularly facing window 16 at its end opposite the second housing segment 11B.

A flange 17 is mounted peripherally within the opening 16 and a radioluminescent screen structure 20 is fitted within the opening 16 against the internally mounted flange 17. An outer molding frame member 21 is detachably affixed to the housing segment 11A around the opening 16, the housing being suitably provided with latch mechnisms 22 permitting convenient fastening of the frame member 21 against the radioluminescent or phosphorescent imaging screen 20 which in turn is in intimate contact with the internal molding 17, whereby extraneous light is kept from the housing segment 11A. At the end of the housing segment 11A above the opening 16, a mirror 23 is mounted extending along a plane skewed by 45 degrees from the longitudinal axis of the housing and from an axis perpendicular to the plane off the screen structure 20, whereby images produced on the radioluminescent screen 20 are reflected by the mirror along the longitudinal axis of the housings 11A, 11B, and toward the camera 13. A workpiece 24 is positioned closely adjacent to the radioluminescent screen 20 between the screen 20 and a source of radiation 25, the source 25 suitably being a source of or thermal neutron radiation, preferably emitted from essentially a point source, for providing as sharp a shadowradiograph as possible upon the radioluminescent screen 20. Preferably, as suggested above, the source 25 may be a non-isotopic, portable neutron generator as disclosed in U. S. Patent 4,300,054, which produces a collimated beam of thermal neutrons directioned toward the screen.

A test pattern projector 30 is mounted above the screen within the first housing segment 11A and is directioned to form a projected image upon the inner side of the radioluminescent screen 20. As will be understood from the description of the operation of the system, the system preferably includes such a projection system because at low flux levels, the very low levels of scintillations produced on the screen 20 are not sufficient to permit adjustment of the focus current and target bias voltages during operation of the camera. The test pattern projected on the screen is of sufficient intensity to permit convenient adjustment of both focus current and bias voltage, for subsequent use with the radiation source (without the projected image). The test pattern projector 30 includes a test pattern transparency 31, a condensing lens 32 being positioned between the transparency and a projection lamp 33 positioned in front of a projection mirror 34. Projection lens system 35 is directioned toward the radioluminescent screen 20. The housing of the test pattern projector 30 is removably affixed through an opening formed in the upper portion of the first housing segment 11A by means of a flange structure 36, which may be bolted to the housing.

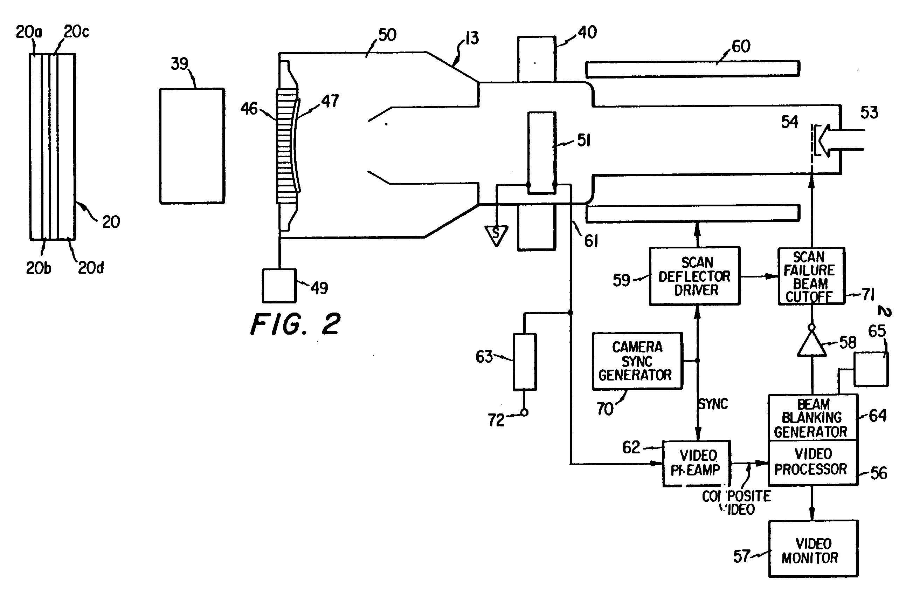

The televison camera 13 in the preferred embodiment of the system is cooled to reduce to the greatest extent possible any noise. As shown diagrammatically in FIGURE 1, the tube 13 is preferably fitted within a cooling ring 40, the cooling ring 40 being mounted circumferentially of the target section of the camera, as will be more fully described hereinbelow with reference to FIGURE 2, for maintaining the target preferably at temperatures in the range of -15 to -40°C. The cooling ring 40 may comprise an annulus through which cryogenic, liquid nitrogen is circulated from a source, represented at 41, external of the housing segment 11B. Alternatively, the cooling ring 40 may comprise a Peltier junction device powered electrically. The second housing segment 11B is preferably insulated by insulation 42 formed on its inner wall surfaces. The interior 12 of the second housing segment 11B is preferably maintained as a moisture-free environment to prevent condensation upon the television tube 13, and a lens structure 39 positioned between the television tube input and the glass plate 15, as will be more fully described hereinbelow. For preventing condensation on the camera 13 or lens system 39, the interior of the second housing segment 11B may be evacuated, or, preferably, charged with a drying agent such as nitrogen from a source indicated at 43. Suitably, the nitrogen source 43 or other dry non-inflammable, electrically insulating gas communicates through valve 44 and a fitting 45 being mounted within a suitable opening formed in the wall of the housing segment, and an outlet 48 is incorporated into the opposite end of the housing segment 11B. Prior to use of the system 10, outlet 48 is opened and nitrogen or other gas is permitted to flow through the inlet formed through fitting 45 for a period of time sufficient to remove most of the air and moisture from within the housing chamber 12 and charge the chamber with nitrogen. Subsequently, the chamber 12 is pressurized to approximately 410 mbar (6 psi), after which valve 44 is closed. It has been found in our experiments that such a charge is sufficient for preventing condensation on the camera tube 13 and optics 39 over an extended period of time of, for example, several months, with no need for further charge.

With reference now to FIGURE 2, the optics and circuitry of the system are shown diagrammatically in somewhat greater detail. An important feature of the invention is the combination of the afore mentioned radioluminescent screen structure 20 with a sensitive, low-noise camera 13 upon which light scintillations are gathered and integrated internally by means of target blanking. It should be underdstood that, in contrast to prior systems, target blanking is not employed for increasing image intensity, but is instead employed for statistical purposes, i. e., for accumulating sufficient scintillation information to form a radiographic image between electron beam raster scanning of the target to provide an adequate image. The light emitting, radioluminescent screen structure 20 includes an outer plate 20A of a material which is as transparent as possible to the radiation employed, but opaque to light. It is typically of aluminum, or of another material of a low "Z" number and low thermal neutron absorption characteristics. For convenience, a sealing layer 20B of aluminum foil is suitably employed adjacent to the aluminum plate 20A to protect the phosphor layer 20C. The phosphor layer 20C is suitably coated or deposited on a substrate 20D, which is of a transparent material such as glass. Alternatively, the phosphor layer 20C can be deposited on the interior surface of the initial, outer plate 20A, with or without a protective glass plate 20D.

The system differs from prior systems in its use of a relatively high intensity radioluminescent layer 20C on the imaging screen, which permits the use of relatively lower gain camera 13, and in the integration of scintillations on the target during the blanking periods. Preferably, the phosphor layer consists of a thin layer of a non-radioactive isotope of lithium in lithium fluoride, suitably combined with zinc sulfide, deposited on the substrate. In prior art systems, lithium-based phosphor layers have been used for gross, low resolution imaging purposes, but they inherently produce light scattering and diffusion when subjected to radiation, which has in the past prevented their use in normal or high resolution imaging. In the present system, the prior difficulties are eliminated by the use of a very thin layer of the material, of about 0.63 mm (.025 inches) or less, and preferably of about 0.5 mm (.020 inches) or less. The lithium powder is mixed with a lithium binder material. Suitably, the neutron-to-light radiophosphorescent convert material consists of a mixture of lithium fluoride and zinc sulfide powders mixed with a binder material, preferably one which also contains lithium, or the powder is otherwise held in place on the substrate by a thin transparent coating material. It is desirable to limit the quantity of binder materials to approximately 10-15 % by weight for providing maximum light output. Although various methods are known and utilized for laying materials in a thin film on a substrate, e. g. thin film chromatography, colloidal suspension in a settling tank etc., a recommended method is to form a suspension of the powder mixture in liquid solution containing a small quantity of the binder materials and then apply the resulting slurry to the substrate by "painting" or loading the substrate with the material, and then drawing a blade or knife-like edge such as a "doctor's bar" across the surface to spread the material uniformly across the substrate. In order to maintain uniform thickness, the substrate must be flat and rigidly attached to a machined flat surface. Coating thickness can be controlled to within 0.025 mm (.001") using this technique. As previously suggested, thin coatings of, for example, about 0.25 mm (.010") to 0.5 mm (.020 inches) have been satisfactory, and preferably 0.3 to 0.63 mm (.012" to .025") coatings are employed.

When used with neutron radiation, the neutron particles react with the lithium to produce alpha particles by nuclear conversion of the lithium molecule, and the alpha particle reacts with the zinc sulfide to produce a scintillation of light energy. The lithium fluoride component is thus a conversion element for converting radiation to alpha particles, and the zinc sulphide component is a light producing element for producing light from alpha energy for laying the material in a thin film on the substrate at a nominal thickness of 0.25 mm (.01 inches) to 0.5 mm (.02 inches).

The phosphor radioluminescent layer 20C is of importance as a radiation conversion material for converting the radiation received into low level, visible light radiation.

Lens structure 39 is an objective lens structure positioned to form an image of the phosphor layer 20C on the input fiber optic screen 46 of the camera. The camera tube 13 itself includes a fiber optic based "lens" input section 46 having a concave, inner photo imaging layer 47 which converts light derived from the scintillations into electron energy which is accelerated through an intensifying section 50 to the camera target 51 by means of an electric potential field. The target 51 comprises a semiconductor, suitably silicon structure. Cooling ring 40 preferably maintains the target at a low temperature of -15°C to -40°C, sufficient to minimize background noise and distortion during blanking periods. As is generally known by those in the art, such tubes 13 incorporate a raster scanning section, represented diagrammatically at 53, and typically employ a blanking grid 54 for imparting a blanking bias preventing scanning of the target 51 in the event of failure of the raster scanning circuitry (for the purpose of preventing damage to the target 51 by extended bombardment of a fixed location on the target 51 by the electron beam). The camera assembly typically includes internal circuitry for effecting the raster scanning, including the raster generator and scanning circuitry. Such internal raster scanning circuitry is generally operated in response to external synchronizing or triggering signals to provide television scanning of the target by the electron beam. A video or picture processing unit 56, suitably a unit of the type manufactured by the Quantex Corporation as Model No. DS-20, is employed for generating timing and synchronization signals, and for storing, processing and providing playback of video displays. Its output is fed to a video monitor unit 57 for permitting monitorirg of images accumulated through integration of one or more successive frames of scanning. An internal timing and control circuit in the beam blanking generator portion of the picture processor 56 generates timing signals which are logic signals of a selected time period. The logic signals are fed through a logic driver 58, suitably an open collector TTL driver, employed to increase the power of the blanking signal and invert it prior to its application to the tube scan failure beam cutoff circuit 71, and subsequently to the camera 13. The beam blanking generator portion 57 of the processing circuitry may be adjusted to vary the blanking period; during application of a blanking signal to the grid 54, the electron scanning beam is biased off. During the blanking period electron charge is stored in the silicon target in a pattern corresponding to the image which is scintillating on the radiofluorescent screen.

At the completion of the blanking time interval, the electron beam is unbiased and allowed to scan the target surface 51 as steered by the deflection driver 59, including the raster generator, which is typically connected to deflection yokes 60 external of the tube. The deflection diver 59 is synchronized with an output signal from the beam blanking generator 57 and with the storage of video information derived from the target potential output 61. The target output, derived from 61, is amplified by a video preamp unit 62 and fed to the video processor 56. A load resistor 63 connected between the target output 51 and a target power supply imparts a bias to the target.

The video processor 56 series to accumulate frames generated over a period of time during the non-blanking periods and provides an output to the video monitor 57 which is of high resoluton, sufficient to permit evaluation of finely detailed internal faults in the specimens under examination. The image processor thus periodically activates the electron beam generator, reads resulting images, and processes the images for integrating sequential frames and averaging the frames, for improving clarity, and then continually reads out the processed image to the monitor. Typically, the electron scanning beam is blanked for a large portion of the inspection time. For example, the period of image storage may be in the order of 100 times greater than the scanning period; in some low level radiation inspection, there may be even longer periods of storage relative to the scanning cycle period, depending upon the scintillation output.

The very low levels of energy produced by scintillations on phosphor screens from thermal neutron radiation or low level X-radiation have not been previously employed for the accumulation of statistical information on a semiconductor target during blanking periods, and the low level of energies presents problems with respect to the biasing and focusing of the camera tube 13. For this reason, the test pattern projector 30 (Fig. 1) is initially employed for adjusting the bias.

Thus, an important feature of the invention is its ability to store and accumulate statistically significant scintillation information on the target 51 within the tube 13 wherein the electron charge storage pattern builds up on the semiconductor target screen from individual scintillation events over a period of time until a statistically satisfactory image may be scanned, rather than being derived from external circuitry. This permits the use of a camera tube 13 which is of relatively inexpensive, construction in comparison with those employing multiple intensification sections, and thereby minimizes noise and distortion which typically results in multiple stages of light intensification. Thus, the combination of the high output phosphor screen with the blanking of the target scanning produce high resolution images with components of moderate cost and complexity. An important advantage of the apparatus is its ability to produce clear images from low levels of radiation and its ability to produce images derived from both X-ray and N-ray sources without changing the internal configuration of the apparatus, that is, without changes of the structure of the phosphor screen or the camera, etc. Extremely clear images are obtained at very low radiation levels. In our experiments, satisfactory high resolution radiographic images have been produced, derived from thermal neutron radiation levels, for example, about 100 neutrons per square cm. per second, and with X-radiation of very low and very high levels (e. g., from 40 KeV, at 0.5 mA, (at 76 cm (30 inches)) to 10 MeV). Moreover, images are obtained from such various radiation sources without mechanical modification of the camera lens system, or screen.

The test pattern projector 30, in combination with the radioluminescent screen 20 facing inwardly within a closed housing segment 11A, permits accurate, convenient focusing, both mechanically, i. e., by positioning lens 43 relative to the camera 13, and by adjustment of the target bias and camera electronic focus, prior to actual radiography operations.

While only one embodiment of the invention , together with modifications thereof, has been described in detail herein and shown in the accompanying drawing, it will be evident that various further modifications are possible in the arrangement and construction of its components without departing from the scope of the invention.

## Claims

1. A neutron radiography inspection system (10) for producing a television display of a shadowgraph or of a transmission image of an object (24) to be inspected, comprising:
a) radiation generating means (25) for directing thermal neutron radiation through said object (24);
b) a radioluminescent screen structure (20) positioned to receive the neutron radiation directed through said object (24), said screen structure (20) including a lithium based phosphorescent means (20c) for producing a shadowgraph scintillation pattern in response to neutrons being directed through the object (24) and impinging on said screen structure (20);
c) a television camera (13) having its optical input section directed toward said radioluminescent screen structure (20), for producing target frames corresponding to said scintillation pattern of said object (24);
d) processing means (56) for the accumulation of a number of said target frames for processing information therefrom to produce said television display; characterized in that
e) said television camera (13) includes
e1) semiconductor target means (51) for forming charge patterns corresponding to said scintillation pattern produced on said radioluminescent screen structure (20);
e2) raster scanning means (53) for scanning said semiconductor target means (51) to generate output signals corresponding to charge patterns formed on said semiconductor target means (51); and by further comprising
f) control means (71) for controlling said raster scanning means (53), for interrupting scanning of said target means (51) at selected intervals for permitting the accumulation of one of said charge patterns corresponding to said scintillation pattern of said object (24) during a number of television frames, so as to form one of said target frames, and for subsequently permitting scanning of said target means (51) so as to read out said one of said target frames;
g) a test pattern projector means (30) arranged to project a test pattern on said radioluminescent screen structure (20), for permitting selection of appropriate bias levels and focus adjustments of said television camera (13).

2. The neutron radiography inspection system (10) of claim 1, further comprising
a housing means (11A, 11B) for supporting said radioluminescent screen structure (20) in a plane which is displaced from and parallel to the optical axis of said television camera (13); and
reflection means (23) being positioned within the housing means (11A, 11B) for reflecting said scintillation pattern from said radioluminescent screen structure (20) toward said television camera (13).

3. The neutron radiography inspection system (10) of claim 2, wherein said test pattern projector means (30) is positioned within said housing (11A, 11B) such that the optical axis of a television camera lens (39) extends between said radioluminescent screen structure (20) and said test pattern projector means (30).

4. The neutron radiography inspection system (10) of anyone of the preceding further comprising means (40) for cooling the semiconductor target region of the said television camera (13) for minimizing inherent system noise during the period in which charge patterns derived from scintillation pattern are accumulated.

5. The neutron radiography inspection system (10) of claim 4, wherein said housing means (11A, 11B) comprises a first housing section (11B) for enclosing said television camera (13), and wherein said cooling means (40) is operable to cool said semiconductor target region within said first housing section (11B).

6. The neutron radiography inspection system (10) of anyone of the preceding claims, further comprising means (43, 44) for charging the interior of said first housing segment with a drying agent.

7. The neutron radiography inspection system (10) of claim 6, wherein said drying agent is nitrogen or SF6.

8. The neutron radiography inspection system (10) of anyone of the preceding claims, wherein said radiation generating means (25) includes a non-isotopic radiation generator (25).

9. The neutron radiography inspection system (10) of claim 8, wherein said radiation generating means (25) further includes means for terminating the generation of neutron radiation.

10. The neutron radiography inspection system (10) of claims 8 or 9, wherein said radiation generating means (25) further includes positioning means for positioning said radiation generating means (25) in alignment with said object (24) and said radioluminescent screen structure (20), in order to align said object (24) between said radiation generating means (25) and said radioluminescent screen structure (20).

11. The neutron radiography inspection system (10) of claim 10, wherein said positioning means include directionable boom means for positioning said radiation generating means (25) in alignment with said object (24) and said radioluminescent screen structure (20).

12. The neutron radiography inspection system (10) of anyone of the preceding claims, wherein said radioluminescent screen structure (20) being positioned between said camera means (13) and said object (24) further comprises a supporting means (20d), said lithium based phosphorescent means (20c) comprises a mixture of lithium fluoride and a radiation conversion component, and said phosphorescent means (20c) is applied on that surface of said supporting means (20d) facing said object (24).

13. A method of producing a television display of a shadowgraph or of a transmission image of an object (24) to be inspected, comprising the steps of:
a) directing thermal neutron radiation through said object (24) for producing said shadowgraph or said transmission image of said object (24);
b) providing a radioluminescent screen structure (20) for receiption of said radiation, said screen structure (20) including means for causing Alpha particles to be emitted upon bombardment of said screen structure (20) by said thermal neutron radiation;
c) providing phosphorescent means (20c) for emitting a scintillation pattern of light in response to the emission said Alpha particles;
d) directing an input section of a television camera (13) toward said screen structure (20), said television camera (13) producing target frames corresponding to said scintillation pattern of said object (24);
e) providing processing means (56) for producing said television image by processing information derived from an accumulation of a number of target frames; characterized by further comprising the steps of
f) providing said television camera (13) with a semiconductor target means (51) for producing a charge pattern corresponding to said scintillation pattern, and with raster scanning means (53) for scanning said semiconductor target means (51);
g) interrupting scanning of said target means (51) during a predetermined number of TV-frame cycles for enhancing the charge pattern, and subsequently scanning said target means (51) for providing one of said target frames; and
h) projecting a test pattern on said radioluminescent screen structure (20) by means of a test pattern projector (30), for permitting selection of appropriate bias levels and focus adjustments of said television camera (13).

## Patentansprüche

1. Neutronenradiographie-Überprüfungssystem (10) zum Herstellen einer Fernsehanzeige bzw. eines Fernsehbildes einer Schattenaufnahme oder einer Transmissions-Abbildung eines zu überprüfenden Objekts (24), welches aufweist:
a) eine Strahlungserzeugungseinrichtung (25), um eine Strahlung aus thermischen Neutronen durch das Objekt (24) hindurch zu leiten;
b) eine radiolumineszierenden Schirmstruktur (20), die derart angeordnet ist, daß sie die durch das Objekt (24) geleitete Neutronenstrahlung empfängt, wobei die Schirmstruktur (20) ein phosphoreszierendes Mittel (20c) auf Lithiumbasis zur Herstellung eines Schattenaufnahmen-Szintillationsmusters als Reaktion auf die Neutronen aufweist, welche durch das Objekt (24) geleitet wurde und auf die Schirmstruktur (20) auftreffen;
c) eine Fernsehkamera (13), deren optischer Eingangsabschnitt auf die radiolumineszierende Schirmstruktur (20) gerichtet ist, um Zieleinzelbilder herzustellen, welche dem Szintillationsmuster des Objekts (24) entsprechen;
d) eine Verarbeitungseinrichtung (56) für das Akkumulieren einer Anzahl von Zieleinzelbildern, um die Information hiervon zur Herstellung des Fernsehbildes zu verarbeiten; dadurch gekennzeichnet, daß
e) die Fernsehkamera (13) aufweist:
e1) eine Halbleiterzieleinrichtung (51) zum Bilden eines Ladungsmusters, welches dem Szintillationsmuster entspricht, das auf der radiolumineszierenden Schirmstruktur (20) hergestellt wird;
e2) eine Rasterabtasteinrichtung (53) zum Abtasten der Halbleiterzieleinrichtung (51), um Ausgangssignale zu erzeugen, welche Ladungsmustern entsprechen, die auf der Halbleiterzieleinrichtung (51) hergestellt wurde; und des weiteren aufweist
f) eine Steuereinrichtung (71) zum Steuern der Rasterabtasteinrichtung (53) zum Unterbrechen des Abtastens der Zieleinrichtung (51) an ausgewählten Intervallen, um die Akkumulation eines dem Szintillationsmuster des Objekts (24) entsprechenden Ladungsmusters während einer Anzahl von Fernseheinzelbildern zur Bildung eines der Zieleinzelbilder zu ermöglichen, und zum Ermöglichen des anschließenden Abtastens der Zieleinrichtung (51), um eines der Zieleinzelbilder auszulesen;
g) einer Testmuster-Projektoreinrichtung (30), die derart angeordnet ist, um ein Testmuster auf die radiolumineszierende Schirmstruktur (20) zu projizieren, um die Auswahl von angemessenen Vorspannungspegeln und Schärfeeinstellungen der Fernsehkamera (13) zu ermöglichen.

2. System (10) nach Anspruch 1, welches des weiteren aufweist:
eine Gehäuseeinrichtung (11A, 11B) zum Halten der radiolumineszierenden Schirmstruktur (20) in einer Ebene, welche von der optischen Achse der Fernsehkamera (13) versetzt und parallel zu dieser ist; und
eine Reflexionseinrichtung (23), die in der Gehäuseeinrichtung (11A, 11B) zum Reflektieren des Szintillationsmusters von der radiolumineszierenden Schirmstruktur (20) auf die Fernsehkamera (13) hin angeordnet ist.

3. System (10) nach Anspruch 2, dadurch gekennzeichnet, daß die Testmuster-Projektoreinrichtung (30) derart im Gehäuse (11A, 11B) angeordnet ist, daß sich die optische Achse einer Fernsehkameralinse (39) zwischen der radiolumineszierenden Schirmstruktur (20) und der Testmuster-Projektoreinrichtung (30) erstreckt.

4. System (10) nach einem der vorhergehenden Ansprüche, welches des weiteren aufweist eine Einrichtung (40) zum Kühlen des Halbleiterzielbereichs der Fernsehkamera (13) zum Minimieren von systembedingtem Rauschen während der Zeit, in der die von dem Szintillationsmuster abgeleitete Ladungsmuster akkumuliert werden.

5. System (10) nach Anspruch 4, dadurch gekennzeichnet, daß die Gehäuseeinrichtung (11A, 11B) einen ersten Gehäuseabschnitt (11B) aufweist, der die Fernsehkamera (13) umschließt, und wobei die Kühleinrichtung (40) derart arbeitet, daß sie den Halbleiterzielbereich im ersten Gehäuseabschnitt (11B) kühlt.

6. System (10) nach einem der vorhergehenden Ansprüche, welches des weiteren eine Einrichtung (43, 44) zum Befüllen des Inneren des ersten Gehäusesegments mit einem Trockenmittel aufweist.

7. System (10) nach Anspruch 6, dadurch gekennzeichnet, daß das Trockenmittel Stickstoff or SF₆ ist.

8. System (10) nach einem der vorhergehenden Ansprüche, dadurch gekennzeichnet, daß die Strahlungserzeugungseinrichtung (25) einen nicht-isotopischen Strahlungserzeuger (25) aufweist.

9. System (10) nach Anspruch 8, dadurch gekennzeichnet, daß die Strahlungserzeugungseinrichtung (25) des weiteren Mittel zum Beenden der Erzeugung von Neutronenstrahlung aufweist.

10. System (10) nach Anspruch 8 oder 9, dadurch gekennzeichnet, daß die Strahlungserzeugungseinrichtung (25) des weiteren eine Stelleinrichtung zum Positionieren der Strahlungserzeugungseinrichtung (25) in Ausrichtung mit dem Objekt (24) und der radiolumineszenten Schirmstruktur (20) aufweist, um das Objekt (24) zwischen der Strahlungserzeugungseinrichtung (25) und der radiolumineszenten Schirmstruktur (20) auszurichten.

11. System (10) nach Anspruch 10, dadurch gekennzeichnet, daß die Stelleinrichtung eine dirigierbare Auslegereinrichtung zum Positionieren der Strahlungserzeugungseinrichtung (25) in Ausrichtung mit dem Objekt (24) und der radiolumineszenten Schirmstruktur (20) aufweist.

12. System (10) nach einem der vorhergehenden Ansprüche, dadurch gekennzeichnet, daß die radiolumineszente Schirmstruktur (20), die zwischen der Kameraeinrichtung (13) und dem Objekt (24) angeordnet ist, des weiteren eine Stütz- bzw. Trägereinrichtung (20d) aufweist, das phosphoreszierende Mittel (20c) auf Lithiumbasis eine Mischung aus Lithiumfluorid und einer Strahlungsumwandlungskomponente aufweist, und das phosphoreszierende Mittel (20c) auf die dem Objekt (24) gegenüberliegende Oberfläche der Trägereinrichtung (20d) aufgetragen ist.

13. Verfahren zum Herstellen einer Fernsehanzeige bzw. eines Fernsehbildes einer Schattenaufnahme oder einer Transmissions-Abbildung eines zu überprüfenden Objekts (24), welches die Schritte aufweist:
a) Richten bzw. Leiten von Strahlung aus thermischen Neutronen durch das Objekt (24) zum Herstellen der Schattenaufnahme oder der Transmissions-Abbildung des Objekts (24);
b) Vorsehen einer radiolumineszierenden Schirmstruktur (20) zum Empfangen der Strahlung, wobei die Schirmstruktur (20) Mittel aufweist, welche verursachen, daß bei Beschuß der Schirmstruktur (20) durch die Strahlung aus thermischen Neutronen Alpha-Teilchen emittiert werden;
c) Vorsehen eines phosphoreszierenden Mittels (20c) zum Aussenden eines Szintillationslichtmusters als Reaktion auf die Emission der Alpha-Teilchen;
d) Richten eines Eingangsabschnitts einer Fernsehkamera (13) auf die Schirmstruktur (20) hin, wobei die Fernsehkamera (13) Zieleinzelbilder herstellt, welche dem Szintillationsmuster des Objekts (24) entsprechen;
e) Vorsehen einer Verarbeitungseinrichtung (56) zum Herstellen der Fernsehanzeige durch die Verarbeitung von Informationen, welche von einer Akkumulation einer Anzahl von Zieleinzelbildern abgeleitet sind; dadurch gekennzeichnet, daß es des weiteren die Schritte aufweist:
f) Versehen der Fernsehkamera (13) mit einer Halbleiterzieleinrichtung (51) zum Herstellen eines Ladungsmuster, welches dem Szintillationsmuster entspricht, und mit einer Rasterabtasteinrichtung (53) zum Abtasten der Halbleiterzieleinrichtung (51);
g) Unterbrechen der Abtastung der Zieleinrichtung (51) während einer vorgegebenen Anzahl von TV-Einzelbildzyklen zum Verstarken des Ladungsmusters, und anschließendem Abtasten der Zieleinrichtung (51) zum Vorsehen eines der Zieleinzelbilder; und
h) Projizieren eines Testmusters auf die radiolumineszierende Schirmstruktur (20) mittels eines Testmusterprojektors (30), um die Auswahl von angemessenen Vorspannungspegeln und Schärfeeinstellungen der Fernsehkamera (13) zu ermöglichen.

## Revendications

1. Système de contrôle radiographique à neutronique (10), destiné à produire un affichage de télévision d'un graphique d'effet de masque ou d'une image de transmission d'un objet (24) devant être contrôlé, comprenant :
a) un moyen de production de rayonnement (25) destiné à diriger un rayonnement neutronique thermique à travers ledit objet (24);
b) une structure à écran radioluminescent (20) positionné de façon à recevoir le rayonnement neutronique dirigé à travers ledit objet (24), ladite structure d'écran (20) comprenant un moyen phosphorescent à base de lithium (20c) pour produire un modèle de scintillation de graphique de masque en réponse aux neutrons dirigés à travers l'objet (24) et heurtant ladite structure d'écran (20);
c) une caméra de télévision (13) ayant sa section d'entrée optique dirigée vers ladite structure d'écran radioluminescent (20), pour produire des cadres de cible correspondant audit modèle de scintillation dudit objet (24);
d) un moyen de traitement (56) pour accumuler un nombre détermine' desdits cadres cibles, pour traiter l'information en provenant, afin de produire ledit affichage de télévision; caractérise en ce que
e) ladite caméra de télévision (13) comprend
e1) un moyen formant cible à semi-conducteur (51), pour constituer des modèles de charge correspondant audit modèle de scintillation produit sur ladite structure d'écran radioluminescent (20);
e2) des moyens de balayage tramés (53) pour balayer ledit moyen formant cible à semi-conducteur (51), afin de produire des signaux de sortie correspondants aux modèles de charge formés sur ledit moyen formant cible à semi-conducteur (51); et par le fait de comprendre en outre
f) un moyen de commande (71) destiné à commander ledit moyen de balayage tramé (53), pour interrompre le balayage dudit moyen formant cible (51) à des intervalles prédéterminés, afin de permettre l'accumulation de l'un desdits modèles de charge correspondant audit modèle de scintillation dudit objet (24) pendant un nombre déterminé de trames de télévision, de façon à former l'une desdites trames de cible et pour ensuite, permettre le balayage dudit moyen formant cible (51) de façon à lire l'une desdites trames de cible;
g) un moyen projecteur de modèles de tests (30) agencé pour projeter un modèle de test sur ladite structure d'écran radioluminescente (20), afin de permettre la sélection de niveaux de polarisation et d'ajustement de focalisation appropriés de ladite caméra de télévision (13).

2. Système de contrôle radiographique neutronique (10) selon la revendication 1, comprenant en outre
un moyen formant boîtier (11A, 11B) pour supporter ladite structure d'écran radioluminescente (10) dans un plan décalé et parallèle par rapport à l'axe optique de ladite caméra de télévision (13); et
un moyen de réflexion (23) positionné à l'intérieur du moyen formant boîtier (11A, 11B) pour réfléchir ledit modèle de scintillaton venant de ladite structure d'écran radioluminescente (20) vers ladite caméra de télévision (13).

3. Système de contrôle radiographique neutronique (10) selon la revendication 2, dans lequel ledit moyen projecteur de modèles de tests (30) est positionné à l'intérieur dudit boîtier (11A, 11B) de manière que l'axe optique d'une lentil le de caméra de télévision (39) s'étend entre ladite structure d'écran luminescente (20) et ledit moyen projecteur de modèles de tests (30).

4. Système de contrôle radiographique neutronique (10) selon l'une quelconque des revendications précédentes comprenant en outre un moyen (40) pour refroidir la zone de cible à semi-conducteur de ladite caméra de télévision (13) en vue de minimiser le bruit inhérent au système pendant la période lors de laquelle les modèles de charge dérivés du modèle de scintillation sont accumulés.

5. Système de contrôle radiographique neutronique (10) selon la revendication 4, dans laquelle ledit moyen formant boîtier (11A, 11B) comprend une première section de boîtier (11B) pour enclore ladite caméra de télévision (13) et dans lequel ledit moyen de refroidissement (40) peut fonctionner pour refroidir ladite zone de cible à semi-conducteur à l'intérieur de ladite première section de boîtier (11B).

6. Système de contrôle radiographique neutronique (10) selon l'une quelconque des revendications précédentes, comprenant en outre des moyens (43, 44) pour pourvoir l'intérieur dudit premier segment de boîtier avec un agent dessicant.

7. Système de contrôle radiographique neutronique (10) selon la revendication 6, dans lequel ledit agent dessicant est l'azote ou le SF6.

8. Système de contrôle radiographique neutronique (10) sel on l'une quelconque des revendications précédentes, dans lequel ledit moyen de production de rayonnement (25) comprend un générateur de rayonnements non-isotopique (25).

9. Système de contrôle radiographique neutronique (10) selon la revendication 8, dans lequel ledit moyen de production de rayonnement (25) comprend en outre un moyen pour stopper la production de rayonnement neutroniques.

10. Système de contrôle radiographique neutronique (10) selon la revendication 8 ou 9, dans lequel ledit moyen de production de rayonnement (25) comprend en outre un moyen de positionnement destiné à positionner ledit moyen de production de rayonnement (25) de façon qu'il soit aligné par rapport audit objet (24) et par rapport à ladite structure d'écran radioluminescente (20), afin d'aligner ledit objet (24) entre ledit moyen de production de rayonnement (25) et ladite structure d'écran radioluminescente (20).

11. Système de contrôle radiographique neutronique (10) selon la revendication 10, dans lequel ledit moyen de positionnement comprend un moyen à bras orientable pour positionner ledit moyen de positionnement de production de rayonnement (25) en alignement avec ledit objet (24) et avec ladite structure d'écran radioluminescente (20).

12. Système de contrôle radiographique neutronique (10) selon l'une quelconque des revendications précédentes, dans lequel ladite structure d'écran radioluminescente (20) qui est positionnée entre ledit moyen formant caméra (13) et ledit objet (24) comprend en outre un moyen-support (20d), ledit moyen phosphorescent à base de lithium (20c) comprenant un mélange de fluorure de lithium et un composant de conversion de rayonnements, et ledit moyen phosphorescent (20c) étant appliqué sur la surface dudit moyen-support (20d) tourné vers ledit objet (24).

13. Procédé de production d'un affichage de télévision d'un graphique à masque ou d'une image de transmission d'un objet (24) à contrôler, comprenant les étapes de :
a) orientation d'un rayonnement neutronique thermique à travers ledit objet (24) en vue de produire ledit graphique à masque ou ladite image de transmission dudit objet (24);
b) mettre à disposition une structure d'écran radioluminescente (20) pour recevoir ledit rayonnement, ladite structure d'écran (20) comprenant un moyen pour provoquer une émission de particules Alpha suite au bombardement de ladite structure d'écran (20) par ledit rayonnement neutronique thermique;
c) mise à disposition d'un moyen phosphorescent (20c) pour émettre un modèle de scintillation de lumière en réponse a l'émission desdites particules Alpha;
d) orientation d'une section d'entrée d'une caméra de télévision (13) vers ladite structure d'écran (20), ladite caméra de télévision (13) produisant des trames de cibles correspondant audit modèle de scintillation dudit objet (24);
e) mise à disposition de moyen de traitement (56) pour produire ladite image de télévision en traitant l'information dérivée d'une accumulation d'un nombre déterminé de trames de cibles; caractérisé par le fait de comprendre en outre les étapes de
f) mise à disposition de ladite caméra de télévision (13) avec un moyen formant cible à semi-conducteur (51) pour produire un modèle de charge correspondant audit modèle de scintillation, et avec un moyen de balayage tramé (53) destiné à balayer ledit moyen formant cible à semi-conducteur (51);
g) interruption du balayage dudit moyen formant cible (51) pendant un nombre prédéterminé de cycles de trame de télévision pour améliorer le modèle de charge, et ensuite exploration dudit moyen formant cible (51) en vue d'engendrer l'une desdites trames de cible; et
h) projeter un modèle de test sur ladite structure d'écran radioluminescente (20) au moyen d'un projecteur de modèles de tests (30) en vue de permettre la sélection de niveaux de polarisation appropriés et d'ajustements de focalisation appropriés de ladite caméra de télévision (13).
